# EUROPÄISCHE PATENTSCHRIFT

(11) **EP 2 369 901 B1**
(45) Veröffentlichungstag und Bekanntmachung des Hinweises auf die Patenterteilung: **06.03.2019**
(21) Anmeldenummer: 11002351.2
(22) Anmeldetag: 22.03.2011
(51) Int. Cl.: H05B 41/24

(54) **Koppler für induktive Beleuchtungseinrichtung**
Coupler for inductive lighting device
Coupleur pour un dispositif d'éclairage inductif

(30) Priorität: 23.03.2010 AT 4672010
(43) Veröffentlichungstag der Anmeldung: 28.09.2011
(73) Patentinhaber: D. Swarovski KG, 6112 Wattens (AT)
(72) Erfinder: Mair, Mathias, 6143 Pfons (AT); Steiner, Thomas, 6112 Wattens (AT); Gruber, Roland, 6073 Sistrans (AT)
(74) Vertreter: Moore, Michael Richard

(56) Entgegenhaltungen:
- WO-A1-2008/137996
- US-A1- 2002 008 973
- US-A1- 2007 236 159
- US-A1- 2007 247 005
- US-A1- 2009 290 332

## Beschreibung

Die Erfindung betrifft eine Anordnung, umfassend eine Mehrzahl von induktiven Beleuchtungseinrichtungen und eine Mehrzahl von Kopplern zur berührungslosen Übertragung von Energie an die induktiven Beleuchtungseinrichtungen, wobei die Koppler jeweils eine Sendeinduktivität, insbesondere eine Sendespule, und einen Eingang zum Anschluss an eine elektrische Speiseleitung und eine Einrichtung zur Erzeugung einer hochfrequenten Spannung aufweisen, mit der die Sendeinduktivität im Betrieb des Kopplers versorgt wird, und wobei die Beleuchtungseinrichtungen jeweils eine Empfängerinduktivität, insbesondere eine Empfängerspule, und eine Lichtquelle insbesondere mit zumindest einer LED aufweisen, wobei die Beleuchtungseinrichtungen über die Empfängerinduktivität elektrisch versorgbar sind. US2002008973 offenbart eine Vielzahl induktiv gekoppelter Beleuchtungseinrichtungen 203 und 204 die über eine Speiseleitung 201 mit hochfrequentem Wechselstrom versorgt werden.

Induktive Beleuchtungseinrichtungen, bei denen die zum Betrieb einer Lichtquelle nötige elektrische Energie berührungslos über ein magnetisches Wechselfeld übertragen wird, sind im Stand der Technik bereits bekannt. Die EP 335 447 B1 zeigt ein derartiges System von induktiven Beleuchtungseinrichtungen zur Markierung bzw. Beleuchtung einer Fahrbahn. Dabei sind induktive Beleuchtungseinrichtungen an der Fahrbahnoberfläche angeordnet, während eine induktive Speiseleitung unterhalb der induktiven Beleuchtungseinrichtungen im Fahrbahnboden angeordnet ist. Dabei ist die Speiseleitung als induktive Speiseleitung ausgebildet, die entlang ihrer gesamten Länge mit einer hochfrequenten Wechselspannung versorgt wird und demnach ein magnetisches Wechselfeld erzeugt, welches seinerseits in einer Empfängerinduktivität in der induktiven Beleuchtungseinrichtung eine Induktionsspannung zum Betrieb der Beleuchtungseinrichtung erzeugt. Dies hat zwar den Vorteil, dass prinzipiell an jeder Stelle oberhalb der induktiven Speiseleitung eine Beleuchtungseinrichtung anordenbar ist. Da jedoch die gesamte Speiseleitung als Sendeinduktivität dient, wobei entlang der gesamten Speiseleitung die hochfrequente Wechselspannung anliegt, muss die hochfrequente Spannung eine überaus große Amplitude aufweisen, was äußerst hohe Verluste mit sich bringt, sodass längere Strecken einer Fahrbahn mit einer derartigen induktiven Speiseleitung und induktiven Beleuchtungseinrichtungen nur mit hohen Verlusten oder gar nicht realisierbar sind.

Aufgabe der Erfindung ist es, diese Nachteile zu vermeiden und eine Vorrichtung zur Verfügung zu stellen, mit der induktive Beleuchtungseinrichtungen auch entlang von langen Strecken, wie beispielsweise langen Tunnels problemlos betrieben werden können.

Dies wird durch eine Anordnung mit den Merkmalen des Anspruchs 1 gelöst.

Die Koppler dienen als Übertragungseinrichtungen zur Übertragung von Energie an induktive Beleuchtungseinrichtungen, ohne dass eine elektrische Verbindung zwischen den Kopplern und den Beleuchtungseinrichtungen bestehen muss. Die Energieübertragung kann demnach berührungslos erfolgen. Die Koppler umfassen jeweils eine Sendeinduktivität, die ein sich veränderndes magnetisches Feld erzeugt. In der Reichweite dieses magnetischen Felds ist eine induktive Beleuchtungseinrichtung angeordnet, die durch den zeitlich sich ändernden magnetischen Fluss eine Induktionsspannung generieren kann. Die Sendeinduktivität ist beispielsweise als Sendespule ausgebildet, die zusätzlich einen die Permeabilität erhöhenden Kern, wie zum Beispiel einen Eisenkern enthalten kann. Die Koppler dienen somit als aktive und lokal wirkende Energieübertragungseinheit.

Die Erfindung hat dabei realisiert, dass die zum Betrieb der Sendeinduktivität nötige hochfrequente Spannung lokal im Koppler von der Einrichtung zur Erzeugung der hochfrequenten Spannung generiert wird, mit der die Sendeinduktivität im Betrieb des Kopplers versorgt wird. Durch die sich ständig mit hoher Frequenz ändernde Stromrichtung wechselt das magnetische Feld der Sendeinduktivität dauernd seine Polarität, was mit einer hohen zeitlichen Änderungsrate des magnetischen Flusses im Sendebereich der Sendeinduktivität einhergeht. Eine induktive Beleuchtungseinrichtung im Einflussbereich der Sendeinduktivität kann diese hohe Änderungsrate in eine Induktionswechselspannung umsetzen, mit der eine in der Beleuchtungseinrichtung vorgesehene Lichtquelle betrieben wird.

Die Koppler weisen zudem jeweils einen Eingang zum Anschluss an eine elektrische Speiseleitung auf, mit der die für den Betrieb der Koppler nötige elektrisch Energie zur Verfügung gestellt wird. Zudem kann eine an sich bekannte Steuereinrichtung vorgesehen sein, mit der die über die Speiseleitung an den Koppler zugeführte Spannung bzw. Stromstärke gesteuert wird. Über die Steuereinrichtung ist es auch möglich Signale betreffend eine Aktivierung des Kopplers oder verschiedene Parameter des von der induktiven Beleuchtungseinrichtung abgestrahlten Lichts, wie zum Beispiel Helligkeit, Farbe, Blinkfunktion oder dergleichen an den Koppler zu übermitteln. Für die Übermittlung dieser Steuersignale kommen an sich im Stand der Technik bekannte Verfahren und Bauteile zum Einsatz.

Beispielsweise ist es denkbar, dass die Steuereinrichtung einen Transformator aufweist, mittels dem eine geringfügige Wechselspannung in die an der Speiseleitung anliegende Gleichspannung oder niederfrequente Wechselspannung eingekoppelt wird, wodurch eine modulierte Gleichspannung oder niederfrequente Wechselspannung entsteht, die zur Codierung eines Steuersignals dienen kann. Dabei kann es vorgesehen sein, dass diese Steuersignale über die Speiseleitung zu einem lokalen Koppler übermittelt werden. Da eine Mehrzahl derartiger Koppler in einer Beleuchtungsanlage vorgesehen ist, kann das Steuersignal eine Adressierung umfassen, damit der jeweils anzusteuernde Koppler ausgewählt wird. Bei den lokalen Kopplern kann dieses Steuersignal demoduliert und zumindest temporär abgespeichert werden. In weiterer Folge wird das Steuersignal beispielsweise von einem im Koppler angeordneten Mikrokontroller (µC) oder einem digitalen Signalprozessor (DSP) durch Modulation in eine hochfrequente Wechselspannung eingekoppelt, die von einer dafür vorgesehenen Einrichtung des lokalen Kopplers erzeugt wird. Über eine Sendeinduktivität, vorzugsweise eine Sendespule wird das modulierte und codierte Signal zur induktiven Beleuchtungseinrichtung übertragen. Zur Codierung selbst sind - wie bereits eingangs erwähnt - mehrere Verfahren, wie z.B. Frequency-Shift-Keying (FSK), Amplitude-Shift-Keying (ASK) oder Phase-Shift-Keying (PSK) denkbar. Eine Steuereinheit der induktiven Beleuchtungseinrichtung dient zur Ansteuerung der Lichtquelle gemäß den Steuersignalen. Für die Steuerung der induktiven Beleuchtungseinrichtung können die oben in Bezug auf den diskutierten Stand der Technik gezeigten Methoden und Bauteile verwendet werden.

Die induktiven Beleuchtungseinrichtungen weisen jeweils eine Empfängerinduktivität auf, mit der das von der Sendeinduktivität erzeugte magnetische Wechselfeld in eine Induktionswechselspannung umgewandelt werden kann. Die Empfängerinduktivität ist insbesondere als Empfängerspule, gegebenenfalls mit einem die Permeabilität erhöhenden Kern, wie zum Beispiel einem Eisenkern ausgebildet. Die induktiven Beleuchtungseinrichtungen weisen weiters jeweils eine Lichtquelle, insbesondere mit zumindest einer LED auf, die durch die von der Empfängerinduktivität umgewandelte Spannung elektrisch versorgt wird.

Ist die Empfängerinduktivität dabei genügend nah an der Sendeinduktivität des der jeweiligen Beleuchtungseinrichtung zugeordneten Kopplers angeordnet, sodass die Änderungen des magnetischen Flusses von der Empfängerinduktivität erfassbar sind, kann Energie berührungslos übertragen werden. Dabei spielt auch die Ausrichtung der Empfängerinduktivität bezüglich der Sendeinduktivität eine Rolle.

Indem jeweils einer induktiven Beleuchtungseinrichtung ein lokaler Koppler zugeordnet wird, dessen Einrichtung zur Erzeugung einer hochfrequenten Spannung die Sendeinduktivität versorgt, welche wiederum ein magnetisches Wechselfeld erzeugt, das von der Empfängerinduktivität der dem Koppler zugeordneten Beleuchtungseinrichtung empfangen und in elektrischen Strom zur Versorgung der Lichtquelle umgewandelt wird, kann die Eingangs gestellte Aufgabe gelöst werden, da eben nur im unmittelbaren Bereich der Beleuchtungseinrichtung eine hochfrequente Wechselspannung erzeugt wird, wogegen die Versorgung der Koppler über die Speiseleitung mit einer davon unabhängigen Spannung erfolgen kann.

Weitere vorteilhafte Ausführungen der Erfindung sind in den abhängigen Ansprüchen definiert.

In einer besonders bevorzugten Ausführungsform der Erfindung ist von der Einrichtung zur Erzeugung einer hochfrequenten Spannung eine Spannung mit einer Frequenz von mehr als 10 kHz, vorzugsweise mehr als 30 kHz erzeugbar. In einer konkreten Ausführungsform der Erfindung erzeugt die Einrichtung eine Spannung mit einer Frequenz von 38,5 kHz, die der Sendeinduktivität zur Erzeugung eines magnetischen Wechselfeldes zugeführt wird. Es sind aber auch andere Frequenzen zur induktiven Energieübertragung verwendbar. Da diese Wechselspannung nur lokal im Bereich des Kopplers vorhanden ist, sind nur geringe Amplituden nötig, wodurch sich etwaige Impedanzverluste und weitere Verluste in engen Grenzen halten.

Die als aktive Sendeeinheit ausgebildeten Koppler verfügen in einer bevorzugten Ausführungsform der Erfindung über einen Taktgeber, der Taktsignale generiert, die einer gewissen Frequenz entsprechen. Diese Taktsignale werden im Betrieb der Koppler den Einrichtungen zur Erzeugung der hochfrequenten Spannung zugeführt, sodass die Frequenz der hochfrequenten Spannung genau kontrollierbar ist: Als Taktgeber sind an sich bekannte elektronische Bauteile aber auch Quarzkristalle einsetzbar.

In einer weiteren Ausführungsform weisen die Koppler einen Mikrokontroller und/oder einen digitalen Signalprozessor auf, wobei der Taktgeber Bestandteil dieses Mikrokontrollers sein kann. Es kann auch vorgesehen sein, dass der Taktgeber mit einem Mikrokontroller oder einem digitalen Signalprozessor verbunden ist. Der Mikrokontroller und/oder der digitale Signalprozessor kann oder können dabei mit der Steuereinrichtung verbunden sein, wodurch die Frequenz, Phase oder die Amplitude der hochfrequenten Spannung steuerbar sind, und wobei in Abhängigkeit der Frequenz, Phase oder die Amplitude der hochfrequenten Spannung die induktive Beleuchtungseinrichtung steuerbar ist.

Die Koppler können in zweifacher Hinsicht als Sendestation von Informationen dienen. Zum einen können über die Sendeinduktivität Steuersignale auf die von einer dafür vorgesehenen Einrichtung erzeugten hochfrequenten Wechselspannung moduliert und codiert werden und dabei an die Empfängerinduktivität übermittelt und anschließend von der Steuereinheit verarbeitet werden. Zum anderen kann die Sendeinduktivität die von einer Übertragungseinheit der Beleuchtungseinrichtung übertragenen Informationen empfangen, d.h. demodulieren und decodieren. Mittels eines Transformators können diese von der Beleuchtungseinrichtung übermittelten Informationen auf eine in der Speiseleitung anliegende Gleichspannung oder niederfrequente Wechselspannung gegebenenfalls zusammen mit einer Adressierung angekoppelt und zur Steuereinrichtung übermittelt werden. Um nicht mit den Steuersignalen der Steuereinrichtung zu kollidieren, kann es vorgesehen sein, dass die Steuereinrichtung eine gewisse Zeitdauer Steuersignale aussendet und für eine daran anschließende Zeitdauer zum Empfang von Informationen von der Beleuchtungseinrichtung bereit ist. Zu diesem Zweck kann beispielsweise der Mikrokontroller der Koppler einen elektronischen Speicher aufweisen, der die von der Beleuchtungseinrichtung übermittelten, decodierten und demodulierten Signale abspeichert, bis die Steuereinrichtung zum Empfang von Daten bereit ist. Es handelt sich dabei um eine asynchrone Datenübertragung.

Die Decodierung der Signale sowohl im Koppler als auch in der Beleuchtungseinrichtung kann dabei mittels eines Mikrokontrollers erfolgen, beispielsweise durch eine Nulldurchgangsdetektion der Spannung im Zusammenhang mit einer Messung der Dauer zwischen verschiedenen Nulldurchgängen. Die sich durch die Modulation ergebenden Frequenzverschiebungen sind mittels eines in einem elektronischen Speicher abgelegten Übertragungsprotokolls eines FSK-Verfahrens decodierbar.

In einer Ausführungsform der Erfindung weisen die Koppler einen DC-DC-Wandler auf, mit dem eine über die elektrische Speiseleitung eingespeiste Gleichspannung transformiert werden kann. Zu diesem Zweck kommen an sich im Stand der Technik bekannte Gleichstromsteller bzw. Gleichspannungssteller und Gleichspannungswandler zum Einsatz. Insbesondere bei langen Speiseleitungen, die mit einer Gleichstromquelle verbunden sind, ist infolge des ohmschen Widerstands der Leitung, die bei in zunehmendem Abstand zur Gleichstromquelle angeschlossenen Kopplern anliegende Gleichspannung abnehmend. Es kann jedoch vorgesehen sein, dass die Einrichtungen zur Erzeugung der hochfrequenten Spannung mit einer Gleichspannung mit einem festgelegten Wert betrieben werden müssen. Zu diesem Zweck transformiert ein DC-DC-Wandler die am Eingang anliegende Gleichspannung auf diesen Wert.

In einer anderen Ausführungsform der Erfindung weisen die Koppler einen AC-DC-Wandler auf, mit dem eine über die Speiseleitung an den Eingang am Koppler zugeführte Wechselspannung gleichgerichtet und/oder auf einen gewünschten Wert transformiert werden kann. Beim AC-DC-Wandler handelt es sich wiederum um an sich im Stand der Technik bekannte Gleichrichter, wie zum Beispiel verschiedene Brückenschaltungen. Der AC-DC-Wandler kann dabei selbst die Funktionalität zur Transformation der gleichgerichteten Spannung umfassen. Es kann aber auch vorgesehen sein, nachfolgend an einen AC-DC-Wandler, der ausschließlich zur Gleichrichtung einer angelegten Wechselspannung dient, ein wie oben beschriebener DC-DC-Wandler zur Transformation der gleichgerichteten Wechselspannung angeschlossen wird. Bei der über die Speiseleitung zugeführten Wechselspannung handelt es sich bevorzugt um Wechselspannung des öffentlichen Stromnetzes, also um eine niederfrequente Wechselspannung, beispielsweise mit 50 Hz oder 60 Hz.

In einer besonders bevorzugten Ausführungsform der Erfindung weisen die Einrichtungen zur Erzeugung der hochfrequenten Spannung einen DC-AC-Wechselrichter auf, der zum Betrieb der Sendeinduktivität mit dieser verbunden wird, sodass die von der Einrichtung erzeugte Wechselspannung an der Sendeinduktivität anliegt. Als DC-AC-Wechselrichter sind wiederum im Stand der Technik bekannte elektrische Vorrichtungen verwendbar. Bevorzugt sind dafür elektronische Systeme vorgesehen, die ohne rotierende Teile auskommen, wie beispielsweise verschiedene Brückenschaltungen oder auch Wechselrichterschaltungen (Inverter) mit mehreren Transistoren. Zudem kann der DC-AC-Wechselrichter auch die Funktionalität zur Wandlung der Wechselspannung auf andere Werte aufweisen, beispielsweise indem ein AC-AC-Wandler mit dem DC-AC-Wandler gekoppelt wird.

Der DC-AC-Wechselrichter kann dabei an einen Taktgeber und/oder eine Mikrokontroller angeschlossen sein, wodurch die Amplitude der erzeugten Wechselspannung sowie deren Frequenz genau gesteuert werden können. Ein Mittelwert der von der Einrichtung erzeugten Frequenz dient prinzipiell zur Übertragung der Energie an die induktive Beleuchtungseinrichtung. In die Amplitude, Phase oder die Frequenz können über den Taktgeber bzw. den Mikrokontroller und zusätzlich oder alternativ über einen digitalen Signalprozessor Steuersignale moduliert werden, die ebenfalls eine Adressierung der Koppler enthalten und zur speziellen Steuerung der Beleuchtungseinrichtung, zum Beispiel hinsichtlich der Helligkeit, der Farbe oder einer Blinkfunktion der Beleuchtungseinrichtung dienen. Zu diesem Zweck können die oben genannten Codier- und Modulationsverfahren zum Zug kommen.

In einer Ausführungsform der Erfindung weisen die Koppler einen Demodulator auf, der zur Demodulation der über die Steuereinrichtung übermittelten Steuersignale dient. Der Demodulator ist in weiterer Folge mit dem Mikrokontroller zur Ansteuerung der Einrichtung zur Erzeugung der hochfrequenten Spannung verbunden.

In einer bevorzugten Ausführungsform der erfindungsgemäßen Anordnung weisen die induktiven Beleuchtungseinrichtungen einen AC-DC-Wandler zur Gleichrichtung und/oder zur Transformation einer von der Empfängerinduktivität induzierten Wechselspannung auf. Der AC-DC-Wandler kann dabei wie oben beschrieben ausgebildet sein. Insbesondere Lichtquellen mit zumindest einer LED müssen mit Gleichstrom betrieben werden, sodass ein derartiger Wandler für diese Zwecke nötig ist. LEDs sind dabei aufgrund ihres niedrigen Energieverbrauchs, ihrer langen Lebensdauer und ihrer geringen Wärmeentwicklung, sowie ihrer Flexibilität bevorzugt vorgesehen.

In einer weiteren Ausführungsform der erfindungsgemäßen Anordnung weisen die induktiven Beleuchtungseinrichtungen einen Mikrokontroller auf. Dieser dient zur Umsetzung von Steuersignalen, die vom Koppler zum Beispiel durch Modulation der Frequenz, der Phase oder der Amplitude übermittelt werden. Der Mikrokontroller steuert dabei die Lichtquelle an, sodass diese Licht in einer anderen Helligkeit abstrahlt, Blinklicht abstrahlt, Licht verschiedener Farbe abstrahlt, prinzipiell aktiviert wird usw.

Die Erfindung betrifft weiters eine Beleuchtungsanlage, insbesondere zur Markierung von Fahrbahnen oder Tunnelwänden mit einer wie oben beschriebenen Anordnung und einer Speiseleitung, die an den Eingang der Koppler angeschlossen ist. Dabei sind entlang der Speiseleitung mehrere derartige Koppler und mehrere induktive Beleuchtungseinrichtungen angeordnet sind, wodurch sich längere Fahrbahnbereiche oder auch Tunnel beleuchten bzw. markieren lassen. Es kann dabei vorgesehen sein, die Speiseleitung sowie die Koppler im Fahrbahnboden oder innerhalb der Tunnelwand anzuordnen. Auf der Fahrbahnoberfläche bzw. der Tunnelwandoberfläche werden dann die induktiven Beleuchtungseinrichtungen, die beispielsweise als sogenannte Straßennägel ausgebildet sein können, im jeweiligen Nahbereich der Koppler angeordnet. Ein weiterer Vorteil einer derartigen Beleuchtungsanlage besteht darin, dass aufgrund des Fehlens von elektrischen Verbindungen zwischen der Speiseleitung einerseits und den Beleuchtungseinrichtungen andererseits eine verbesserte Abdichtung der Beleuchtungseinrichtung und der elektrischen Versorgung gegenüber einem Wassereintritt gegeben ist.

In einer Ausführungsform der erfindungsgemäßen Beleuchtungsanlage ist eine Gleichstromquelle vorgesehen, an die die Speiseleitung zur Versorgung der Koppler angeschlossen ist.

Es kann auch vorgesehen sein, dass statt der Gleichstromquelle eine niederfrequente Wechselstromquelle, beispielsweise mit einer Frequenz von 50 Hz oder von 60 Hz zur Versorgung der Koppler vorgesehen ist. Eine derartige Beleuchtungsanlage hat den Vorteil, dass die Wechselstromquelle in einfacher Weise durch einen Anschluss an das öffentliche Stromnetz ausgebildet sein kann. Zudem ergibt sich durch einen derartigen Betrieb mit Wechselstrom eine verringerte galvanische Korrosion.

In beiden Fällen muss aufgrund der aktiven Koppler die Speiseleitung nicht selbst als Sendeinduktivität dienen, sodass Impedanzverluste und weitere Verluste, die sich augrund einer längeren, mit einer hochfrequenten Spannung versorgten Speiseleitung ergeben, stark eingegrenzt werden und auch Beleuchtungsanlagen mit längeren Speiseleitungen problemlos betrieben werden können.

In einer Ausführungsform der Erfindung weist die induktive Beleuchtungseinrichtung beispielsweise im Fahrbahnboden angeordneten Koppler einen Abstand zwischen 5 und 50 mm auf. Dieser Abstand bezieht sich auf den Abstand der Empfängerinduktivität und der Sendeinduktivität.

Weist die Beleuchtungseinrichtung eine Empfängerspule, vorzugsweise mit einem eisenhaltigen Kern, beispielsweise einem Eisenkern, auf und weist der Koppler eine Sendespule, vorzugsweise ebenfalls mit einem eisenhaltigen Kern, auf, ist in einer Ausführungsform der erfindungsgemäßen Beleuchtungsanlage vorgesehen, dass die Empfängerspule und die Sendespule im Wesentlichen parallel ausgerichtet sind. Bei einer Beleuchtungsanlage mit einer Mehrzahl derartiger Koppler und Beleuchtungseinrichtungen zur Markierung einer Fahrbahn sind die Koppler längs des Fahrbahnrandes anordenbar, sodass die Sendespulen parallel zum Fahrbahnrand ausgerichtet sind. Dadurch ist eine einfache Anordnung der Beleuchtungseinrichtungen an der Fahrbahnoberfläche möglich, indem die Empfängerspule der Beleuchtungseinrichtungen ebenfalls parallel zum Fahrbahnrand ausgerichtet wird. Bei einer derartigen parallelen Ausrichtung wird möglichst viel vom von der Sendespule erzeugten magnetischen Wechselfeld von der Empfängerspule erfasst und zur Erzeugung einer Induktionsspannung benutzt.

Weitere Einzelheiten und Vorteile der vorliegenden Erfindung werden anhand der Figurenbeschreibung unter Bezugnahme auf die Zeichnungen im Folgenden näher erläutert.

Darin zeigt:
- Fig. 1: ein schematisches Blockbild einer erfindungsgemäßen Beleuchtungsanlage und
- Fig. 2: eine schematische Darstellung eines Kopplers.

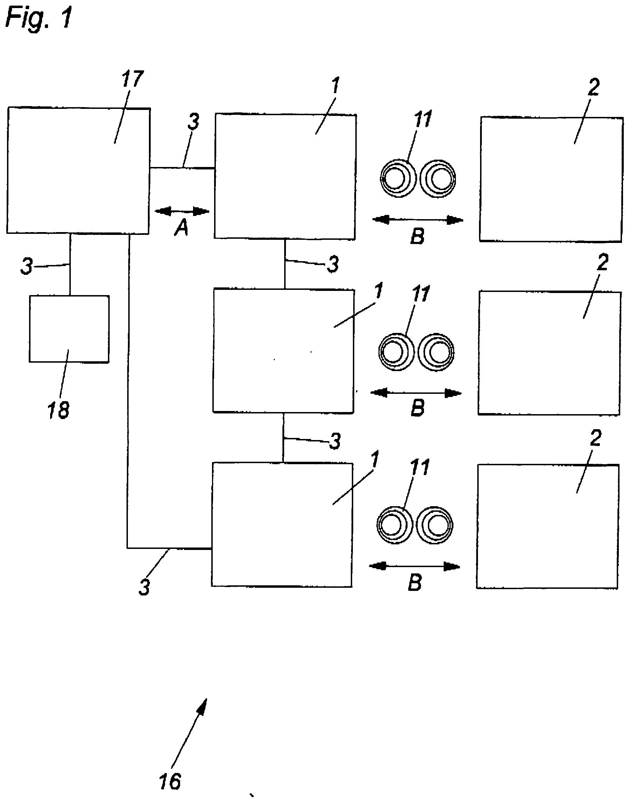

Fig. 1 zeigt eine schematische Blockdarstellung der wesentlichen Bauteile einer erfindungsgemäßen Beleuchtungsanlage 16. Eine Stromquelle 18 ist mit einer Steuereinrichtung 17 über eine Speiseleitung 3 verbunden. Die Stromquelle 18 kann als Gleichstromquelle oder als niederfrequente Wechselstromquelle ausgebildet sein. Des Weiteren sind in diesem Ausführungsbeispiel drei Koppler 1 zur berührungslosen Übertragung von Energie, die jeweils einen Eingang zum Anschluss an eine elektrische Speiseleitung 3 aufweisen, mit der Steuereinrichtung 17 und der Stromquelle 18 über die Speiseleitung 3 verbunden. Die Koppler 1 und die Stromquelle 18 können dabei parallel geschaltet sein. Die Koppler 1 selbst können identisch ausgebildet sein, wobei die Steuereinrichtung 17 über Mittel verfügen kann, mit denen die Koppler 1 adressierbar und somit individuell ansteuerbar sind.

So kann beispielsweise die an einen ersten Koppler 1 gekoppelte induktive Beleuchtungseinrichtung 2 konstant Licht abstrahlen, während eine, über einen weiteren Koppler 1 gekoppelte induktive Beleuchtungseinrichtung 2 blinkendes Licht, z.B. zur Markierung einer Unfallstelle abstrahlt. Zum Zwecke dieser Steuerung werden Steuersignale von der Steuereinrichtung 17 an die Koppler 1 übermittelt. Da auch eine Rückübertragung von Informationen, beispielsweise des vorliegenden Betriebszustandes der Koppler 1 oder der induktiven Beleuchtungseinrichtungen 2 an die Steuereinrichtung 17 vorgesehen sein kann, ist der Informationsfluss zwischen Steuereinrichtung 17 und Koppler 1 durch den Doppelpfeil A markiert. Auf entsprechende Doppelpfeile zwischen der Steuereinrichtung 17 und den weiteren Kopplern 1 ist aus Gründen der Übersichtlichkeit verzichtet worden.

Die Sendeinduktivität 5 der Koppler 1 erzeugt ein magnetisches Wechselfeld 11, das in dieser Figur schematisch durch Feldlinien dargestellt ist. Dieses magnetische Wechselfeld 11 erzeugt im Bereich der Empfängerinduktivität 6 der induktiven Beleuchtungseinrichtungen 2 einen zeitlich sich verändernden magnetischen Fluss, der wiederum eine Induktionswechselspannung für den Betrieb der Beleuchtungseinrichtung 2, insbesondere der Lichtquelle 14 erzeugt. Auf eine elektrische Verbindung zwischen den einzelnen Beleuchtungseinrichtungen 2, sowie zwischen den Beleuchtungseinrichtungen 2 und den Kopplern 1 kann aufgrund der berührungslosen Energieübertragung verzichtet werden.

Es kann auch vorgesehen sein, Steuersignale von den Kopplern 1, beispielsweise durch Frequenz-, Phasen- oder Amplitudenmodulation an die induktiven Beleuchtungseinrichtungen 2 weiterzuleiten. Genauso ist es denkbar, dass die induktiven Beleuchtungseinrichtungen 2 Informationen bezüglich ihres Betriebszustandes an die Steuereinrichtung 17 beispielsweise mittels Frequenz-, Phasen- oder Amplitudenmodulation über den Koppler 1 zurück übermittelt, sodass der Informationsfluss zwischen den Kopplern 1 und den induktiven Beleuchtungseinrichtungen 2 in beide Richtungen des Doppelpfeiles B verlaufen kann.

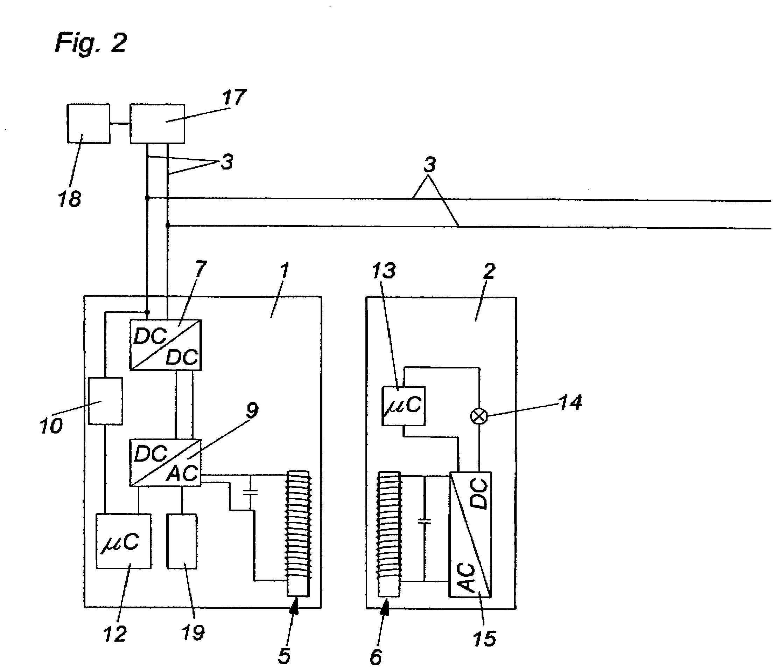

Fig. 2 zeigt eine schematische Blockdarstellung eines Kopplers 1 zur berührungslosen Übertragung von Energie an eine induktive Beleuchtungseinrichtung 2, wie sie beispielsweise zur Markierung einer Fahrbahn oder eines Tunnels Verwendung finden kann. Der Koppler 1 wird in diesem Fall mit Gleichstrom betrieben, das heißt die Stromquelle 18 ist als Gleichstromquelle ausgebildet. Zu diesem Zweck ist eine Speiseleitung 3 an einen dafür vorgesehenen Eingang am Koppler 1 angeschlossen. An die Speiseleitung 3 können weitere Koppler 1 angeschlossen werden. Dies ist in dieser Figur aus Gründen der Übersichtlichkeit nicht dargestellt. Am Eingang des Kopplers 1 liegen beispielsweise 48 Volt an, die von der Gleichstromquelle geliefert werden, da der Koppler 1 sehr nahe im Bereich der Gleichstromquelle angeordnet ist. Bei Beleuchtungsanlagen mit kürzeren Speiseleitungen 3 könnte auch eine Grundversorgung mit 24 V genügen. Da in Folge des Widerstands der Speiseleitung 3 die an weiteren Kopplern 1 anliegende Gleichspannung geringer ist, kann der Koppler 1 auch mit geringeren Spannungen betrieben werden. Zu diesem Zweck ist ein DC-DC-Wandler 7 zur Transformation der am Eingang des Kopplers 1 anliegenden Gleichspannung auf einen geringen Wert, beispielsweise 12 Volt, mit dem eine Einrichtung zur Erzeugung einer hochfrequenten Spannung betrieben wird, vorgesehen. Für diesen DC-DC-Wandler, der als Entnahmebegrenzer für die abgegriffene Spannung dient, können im Stand der Technik an sich bekannte Vorrichtungen verwendet werden.

Die Einrichtung zur Erzeugung einer hochfrequenten Spannung umfasst einen DC-AC-Wechselrichter 9, der aus der vom DC-DC-Wandler 7 zur Verfügung gestellten Gleichspannung eine hochfrequente Wechselspannung erzeugt. Gleichzeitig kann auch vorgesehen sein, die Amplitude der Wechselspannung zu transformieren. Die Frequenz der Wechselspannung liegt beispielsweise bei 38,5 kHz. Die Taktung der Einrichtung zur Erzeugung der hochfrequenten Spannung kann von einem Mikrokontroller 12 und/oder einem separaten Taktgeber 19 erfolgen. Der Taktgeber 19 kann dabei als an sich bekannte elektronische Baueinheit oder als Quarzkristall ausgebildet sein, dessen Taktfrequenz äußerst stabil ist. Demgegenüber kann der Mikrokontroller 12 gegebenenfalls über einen Demodulator 10 Steuersignale empfangen und verarbeiten.

Der Demodulator 10 dient zur Auskopplung der auf die Gleichspannung bzw. niederfrequente Wechselspannung der Speiseleitung 3 eingekoppelten Steuersignale der Steuereinrichtung 17. Diese Steuersignale werden vor dem DC-DC-Wandler 7 abgegriffen, da der DC-DC-Wandler 7 die Modulationen auslöschen würde. Der Demodulator 10 weist einen elektronischen Speicher zur Speicherung der Steuersignale auf, da die Steuereinrichtung 17 nicht durchgehend Steuersignale sendet, sondern während einer gewissen Zeitspanne für den Empfang von Informationen der Beleuchtungseinrichtungen 2 aktiviert ist. Ein derartiger Demodulator 10 ist im Stand der Technik an sich bekannt, beispielsweise aus der Funktechnik. Dadurch sind verschiedene Betriebsparameter der induktiven Beleuchtungseinrichtung 2 steuer- oder regelbar.

In Abhängigkeit der von der Steuereinrichtung 17 gesendeten, gegebenenfalls über einen Demodulator 10 umgewandelten, Steuersignale kann der Mikrokontroller 12 einen geringfügigen Frequenzshift von beispielsweise +/- 150 Hz oder eine geringfügige Amplitudenmodulation erzeugen und damit Informationen, insbesondere Steuersignale an die induktive Beleuchtungseinrichtung 2 übertragen. An den DC-AC-Wechselrichter 9 ist eine als Sendespule mit Eisenkern ausgebildete Sendeinduktivität 5 angeschlossen, die die hochfrequente Wechselspannung in ein sich rasch änderndes magnetisches Feld umwandelt. Dieses sich rasch ändernde magnetische Feld erzeugt in einer als Empfängerspule mit Eisenkern ausgebildeten Empfängerinduktivität 6 eine ebenfalls hochfrequente Spannung. Da die Beleuchtungseinrichtung 2 eine als Leuchtdiode ausgebildete Lichtquelle 14 umfasst, ist ein AC-DC-Wandler 15 zur Gleichrichtung der Induktionswechselspannung in eine Gleichspannung vorgesehen.

Die Lichtquelle 14 kann dabei aus mehreren, insbesondere zur Abstrahlung verschiedener Farben ausgebildeter Leuchtdioden (LEDs) bestehen. Zur Verarbeitung der von der Steuereinrichtung 17 übermittelten Steuersignale, sowie gegebenenfalls zur Erzeugung eigener Signale, die an die Steuereinrichtung 17 wiederum mittels Frequenzmodulation oder Amplitudenmodulation über die Empfänger- und Sendeinduktivität 6, 5 rück übermittelbar sind, weist die induktive Beleuchtungseinrichtung 2 einen eigenen Mikrokontroller 13 auf.

Nicht dargestellt in dieser Figur sind Vorrichtungen, mit denen Informationen, die von der Beleuchtungseinrichtung 2 an den Koppler 1 übermittelt werden und von der Sendeinduktivität 5 empfangen werden, an die Steuereinrichtung 17 weitergeleitet werden. Diese Vorrichtungen umfassen beispielsweise einen Transformator und können ähnlich der Vorrichtungen der Steuereinrichtung 17 ausgebildet sein, die zur Übermittlung der Steuersignale an den Koppler 1 dienen.

Sowohl im Koppler 1 als auch in der induktiven Beleuchtungseinrichtung 2 sind weitere zum Teil nicht dargestellte elektronische Bauteile vorhanden, die zum Betrieb des Kopplers 1 sowie der induktiven Beleuchtungseinrichtung 2 nötig sind. Derartige elektronische Bauteile sind allerdings im Stand der Technik bekannt und unterliegen dem Allgemeinwissen eines Fachmanns auf diesem Gebiet.

Neben den induktiven Beleuchtungseinrichtungen 2 können über die Speiseleitung 3 und die Steuereinrichtung 17 weitere Beleuchtungselemente auch direkt ohne induktive Energieübertragung angeschlossen werden. Diese weiteren Beleuchtungselemente sind in diesem Fall zusätzlich zu den induktiven Beleuchtungseinrichtungen 2 und den Kopplern 1 in einer Beleuchtungsanlage vorgesehen, wobei diese direkten Beleuchtungselemente ebenfalls ansteuerbar sind und ebenfalls über Vorrichtungen verfügen können, mit denen Informationen über den Betriebszustand der weiteren Beleuchtungselemente an die Steuereinrichtung 17 übermittelbar sind.

Die oben angeführten, nicht näher erläuterten elektronischen Bauteile, wie beispielsweise der Mikrokontroller oder die verschiedenen Wandler und Stromrichter können dabei als an sich im Stand der Technik bekannte Bauteile ausgebildet sein.

## Patentansprüche

1. Anordnung, umfassend eine Mehrzahl von induktiven Beleuchtungseinrichtungen (2) und eine Mehrzahl von Kopplern (1) zur berührungslosen Übertragung von Energie an die induktiven Beleuchtungseinrichtungen (2), wobei die Koppler (1) jeweils eine Sendeinduktivität, insbesondere eine Sendespule, und einen Eingang zum Anschluss an eine elektrische Speiseleitung und eine Einrichtung zur Erzeugung einer hochfrequenten Spannung aufweisen, mit der die Sendeinduktivität (5) im Betrieb des Kopplers (1) versorgt wird, und wobei die Beleuchtungseinrichtungen (2) jeweils eine Empfängerinduktivität (6), insbesondere eine Empfängerspule, und eine Lichtquelle (14) insbesondere mit zumindest einer LED aufweisen, wobei die Beleuchtungseinrichtungen (2) über die Empfängerinduktivität (6) elektrisch versorgbar sind, wobei jeder der induktiven Beleuchtungseinrichtungen (2) ein eigener Koppler (1) zugeordnet ist, **dadurch gekennzeichnet, dass** jeder der Koppler (1) einen Demodulator (10) zur Auskopplung der auf die Speiseleitung (3) eingekoppelten Steuersignale aufweist.

2. Anordnung nach Anspruch 1, **dadurch gekennzeichnet, dass** von der Einrichtung zur Erzeugung einer hochfrequenten Spannung eine Spannung mit einer Frequenz von mehr als 10 kHz, vorzugsweise von mehr als 30 kHz, erzeugbar ist.

3. Anordnung nach Anspruch 1 oder 2, **dadurch gekennzeichnet, dass** in den Kopplern (1) jeweils ein Taktgeber (19) vorgesehen ist, dessen Taktsignale der Einrichtung zur Erzeugung der hochfrequenten Spannung zugeführt werden.

4. Anordnung nach Anspruch 3, **dadurch gekennzeichnet, dass** jeder der Koppler (1) und jede der Beleuchtungseinrichtungen (1) einen Mikrokontroller (12) und/oder eine digitalen Signalprozessor aufweist.

5. Anordnung nach einem der Ansprüche 1 bis 4, **dadurch gekennzeichnet, dass** in jedem der Koppler (1) ein DC-DC-Wandler (7) zur Transformation einer über die elektrische Speiseleitung (3) eingespeisten Gleichspannung vorgesehen ist.

6. Anordnung nach einem der Ansprüche 1 bis 5, **dadurch gekennzeichnet, dass** in jedem der Koppler (1) und in jeder der Beleuchtungseinrichtungen (2) ein AC-DC-Wandler (8) zur Gleichrichtung und/oder zur Transformation einer über die elektrische Speiseleitung (3) eingespeisten Wechselspannung vorgesehen ist.

7. Anordnung nach einem der Ansprüche 1 bis 6, **dadurch gekennzeichnet, dass** die Einrichtung zur Erzeugung der hochfrequenten Spannung einen DC-AC-Wechselrichter (9) aufweist.

8. Anordnung nach einem der Ansprüche 1 bis 7, **dadurch gekennzeichnet, dass** jeder der Koppler (1) in einem gesonderten Gehäuse angeordnet ist.

9. Beleuchtungsanlage, insbesondere zur Markierung von Fahrbahnen und/oder Tunnelwänden, mit einer Anordnung nach einem der Ansprüche 1 bis 8 und einer Speiseleitung (3), die an den Eingang der Koppler (1) angeschlossen ist.

10. Beleuchtungsanlage nach Anspruch 9, **dadurch gekennzeichnet, dass** die lokalen Koppler (1) mit einer gemeinsam Speiseleitung (3) verbunden sind.

11. Beleuchtungsanlage nach Anspruch 9 oder 10, **dadurch gekennzeichnet, dass** eine Gleichstromquelle vorgesehen ist, an die die Speiseleitung (3) zur Versorgung des mindestens einen Kopplers (1) angeschlossen ist.

12. Beleuchtungsanlage nach Anspruch 9 oder 10, **dadurch gekennzeichnet, dass** eine niederfrequente Wechselstromquelle vorgesehen ist, die an die Speiseleitung (3) zur Versorgung des mindestens einen Kopplers (1) angeschlossen ist.

13. Beleuchtungsanlage nach einem der Ansprüche 9 bis 12, **dadurch gekennzeichnet, dass** die Empfängerinduktivität (6) der induktive Beleuchtungseinrichtung (2) einen Abstand zur Sendeinduktivität (5) des Kopplers (1) zwischen 5 mm und 50 mm aufweist.

14. Beleuchtungsanlage nach einem der Ansprüche 9 bis 13, **dadurch gekennzeichnet, dass** die Beleuchtungseinrichtung (2) eine Empfängerspule (6), vorzugsweise mit einem eisenhaltigen Kern, aufweist, und dass der Koppler (1) eine Sendespule vorzugsweise mit einem eisenhaltigen Kern aufweist, wobei die Empfängerspule (6) und die Sendespule im Wesentlichen parallel ausgerichtet sind.

## Claims

1. Arrangement comprising a plurality of inductive lighting devices (2) and a plurality of couplers (1) for the contactless transmission of energy to the inductive lighting devices (2), the couplers (1) each having a transmitting inductor, in particular a transmitter coil, and an input for connection to an electrical supply line, and a device for generating a high-frequency voltage which is supplied to the transmitting inductor (5) during operation of the coupler (1), and wherein the lighting devices (2) each have a receiving inductor (6), in particular a receiver coil, and a light source (14), in particular with at least one LED, wherein the lighting devices (2) can be electrically supplied via the receiving inductor (6), wherein each of the inductive lighting devices (2) is assigned its own coupler (1), **characterised in that** each of the couplers (1) has a demodulator (10) for decoupling the control signals coupled to the supply line (3).

2. Arrangement according to claim 1, **characterised in that** a voltage with a frequency of more than 10 kHz, preferably of more than 30 kHz, can be generated by the device for generating a high-frequency voltage.

3. Arrangement according to claim 1 or 2, **characterised in that** in each case a clock generator (19) is provided in the couplers (1), the clock signals of which are fed to the device for generating the high-frequency voltage.

4. Arrangement according to claim 3, **characterised in that** each of the couplers (1) and each of the lighting devices (1) comprises a microcontroller (12) and/or a digital signal processor.

5. Arrangement according to one of claims 1 to 4, **characterised in that** a DC-DC converter (7) is provided in each of the couplers (1) for transforming a DC voltage fed in via the electrical supply line (3).

6. Arrangement according to one of claims 1 to 5, **characterised in that** an AC-DC converter (8) is provided in each of the couplers (1) and in each of the lighting devices (2) for rectifying and/or transforming an AC voltage fed in via the electrical supply line (3).

7. Arrangement according to one of claims 1 to 6, **characterised in that** the device for generating the high-frequency voltage has a DC-AC inverter (9).

8. Arrangement according to one of claims 1 to 7, **characterised in that** each of the couplers (1) is arranged in a separate housing.

9. Lighting installation, in particular for marking roadways and/or tunnel walls, having an arrangement according to one of claims 1 to 8 and a supply line (3) which is connected to the input of the couplers (1).

10. Lighting installation according to claim 9, **characterised in that** the local couplers (1) are connected to a common supply line (3).

11. Lighting installation according to claim 9 or 10, **characterised in that** a direct current source is provided to which the supply line (3) for supplying at least one coupler (1) is connected.

12. Lighting installation according to claim 9 or 10, **characterised in that** a low-frequency alternating current source is provided which is connected to the supply line (3) for supplying at least one coupler (1).

13. Lighting installation according to one of claims 9 to 12, **characterised in that** the receiving inductor (6) of the inductive lighting device (2) is situated at a distance of between 5 mm and 50 mm from the transmitting inductor (5) of the coupler (1).

14. Lighting installation according to one of claims 9 to 13, **characterised in that** the lighting device (2) has a receiver coil (6), preferably with a ferrous core, and **in that** the coupler (1) has a transmitter coil, preferably with a ferrous core, the receiver coil (6) and the transmitter coil being aligned essentially in parallel.

## Revendications

1. Agencement comprenant une pluralité de dispositifs d'éclairage (2) inductifs et une pluralité de coupleurs (1) destinés à transférer de l'énergie sans contact vers les dispositifs d'éclairage (2) inductifs, les coupleurs (1) présentant chacun une inductance d'émission, notamment une bobine émettrice, une entrée pour le raccordement à une ligne d'alimentation électrique et un dispositif pour la production d'une tension à haute fréquence qui alimente l'inductance d'émission (5) lorsque le coupleur (1) est en marche, et les dispositifs d'éclairage (2) présentant chacun une inductance de réception (6), notamment une bobine réceptrice, et une source de lumière (14) notamment munie d'au moins une LED, les dispositifs d'éclairage (2) étant susceptibles d'être alimentés en électricité par le biais de l'inductance de réception (6), un propre coupleur (1) étant associé à chacun des dispositifs d'éclairage (2) inductifs, **caractérisé en ce que** chacun des coupleurs (1) présente un démodulateur (10) destiné à découpler les signaux de commande couplés sur la ligne d'alimentation (3).

2. Agencement selon la revendication 1, **caractérisé en ce qu'**une tension d'une fréquence de plus de 10 kHz, de préférence de plus de 30 kHz est susceptible d'être produite par le dispositif destiné à produire une tension à haute fréquence.

3. Agencement selon la revendication 1 ou 2, **caractérisé en ce que** dans chaque coupleur (1) est prévue une horloge interne (19) dont les signaux d'horloge sont fournis au dispositif destiné à produire la tension à haute fréquence.

4. Agencement selon la revendication 3, **caractérisé en ce que** chacun des coupleurs (1) et chacun des dispositifs d'éclairage (1) présentent un microcontrôleur (12) et/ou un processeur de signal numérique.

5. Agencement selon l'une quelconque des revendications 1 à 4, **caractérisé en ce qu'**est prévu dans chacun des coupleurs (1) un convertisseur de tension DC/DC (7) destiné à transformer une tension continue injectée par le biais de la ligne d'alimentation électrique (3).

6. Agencement selon l'une quelconque des revendications 1 à 5, **caractérisé en ce qu'**est prévu dans chacun des coupleurs (1) et dans chacun des dispositifs d'éclairage (2) un convertisseur de tension AC/DC (8) destiné à redresser et/ou à transformer une tension alternative injectée par le biais de la ligne d'alimentation électrique (3).

7. Agencement selon l'une quelconque des revendications 1 à 6, **caractérisé en ce que** le dispositif destiné à produire la tension à haute fréquence présente un onduleur DC/AC (9).

8. Agencement selon l'une quelconque des revendications 1 à 7, **caractérisé en ce que** chacun des coupleurs (1) est agencé dans un boîtier individuel.

9. Installation d'éclairage, notamment destiné au marquage de voies de circulation et/ou de parois de tunnel, munie d'un agencement selon l'une quelconque des revendications 1 à 8 et d'une ligne d'alimentation (3) qui est raccordée à l'entrée des coupleurs (1).

10. Installation d'éclairage selon la revendication 9, **caractérisée en ce que** les coupleurs locaux (1) sont connectés à une ligne d'alimentation (3) commune.

11. Installation d'éclairage selon la revendication 9 ou 10, **caractérisée en ce qu'**une source de courant continu est prévue, à laquelle est raccordée la ligne d'alimentation (3) destinée à alimenter l'au moins un coupleur (1).

12. Installation d'éclairage selon la revendication 9 ou 10, **caractérisée en ce qu'**une source de courant alternatif à basse fréquence est prévue, laquelle est raccordée à la ligne d'alimentation (3) destinée à alimenter au moins un des coupleurs (1).

13. Installation d'éclairage selon l'une quelconque des revendications 9 à 12, **caractérisée en ce que** l'inductance de réception (6) du dispositif d'éclairage (2) inductif est distant de l'inductance d'émission (5) du coupleur (1) d'un espace de 5 mm à 50 mm.

14. Installation d'éclairage selon l'une quelconque des revendications 9 à 13, **caractérisé en ce que** le dispositif d'éclairage (2) présente une bobine réceptrice (6) de préférence munie d'un noyau contenant du fer, et que le coupleur (1) présente une bobine émettrice de préférence munie d'un noyau contenant du fer, les bobines réceptrice (6) et émettrice étant sensiblement orientées dans un sens parallèle.
